# EUROPÄISCHE PATENTSCHRIFT

(11) **EP 3 384 097 B1**
(45) Veröffentlichungstag und Bekanntmachung des Hinweises auf die Patenterteilung: **25.03.2020**
(21) Anmeldenummer: 16812914.6
(22) Anmeldetag: 02.12.2016
(51) Int. Cl.: E04B 1/26

(54) **VERBINDUNGSVORRICHTUNG ZUM AUFLAGERN EINES HOLZBAUELEMENTS**
CONNECTING DEVICE FOR MOUNTING A WOODEN CONSTRUCTION ELEMENT
DISPOSITIF DE LIAISON POUR SUPPORTER UN ÉLÉMENT DE CONSTRUCTION EN BOIS

(30) Priorität: 02.12.2015 DE 102015224116
(43) Veröffentlichungstag der Anmeldung: 10.10.2018
(73) Patentinhaber: Universität Innsbruck, 6020 Innsbruck (AT)
(72) Erfinder: MADEREBNER, Roland, 6020 Innsbruck (AT)
(74) Vertreter: MFG Patentanwälte Meyer-Wildhagen Meggle-Freund Gerhard PartG mbB
(86) Internationale Anmeldenummer: PCT/EP2016/079597
(87) Internationale Veröffentlichungsnummer: WO 2017/093490

(56) Entgegenhaltungen:
- WO-A1-01/25558
- WO-A1-2005/078202
- WO-A1-2014/012708
- DE-A1-102009 022 161
- GB-A- 2 150 998

## Beschreibung

### GEBIET DER ERFINDUNG

Die vorliegende Erfindung bezieht sich allgemein und insbesondere auf eine Verbindungsvorrichtung zum Auflagern eines - insbesondere platten- oder balkenförmigen - Holzbauelementes auf eine Stütze.

Die Erfindung bezieht sich ferner auf eine Holzbauanordnung mit einer erfindungsgemäßen Verbindungsvorrichtung, mit einer Stütze und mit einem Holzbauelement.

Ferner bezieht sich die Erfindung auf ein Bauwerk mit einer solchen Holzbauanordnung.

### HINTERGRUND DER ERFINDUNG

Holz wird seit langer Zeit zur Herstellung von Tragwerken, Bauwerken und Gebäuden verwendet. Dabei wurden und werden insbesondere balkenförmige Holzbauelemente (Spanten, Sparren, Balken, Fachwerke, Dachstühle) sowie auch plattenförmige Holzbauelemente (Bretter, Planken, Platten) verwendet.

Moderne Holzbauwerke können aus einer Vielzahl von unterschiedlichen Holzbauprodukten bzw. Holzwerkstoffen bestehen. Typische Holzwerkstoffe sind neben Massivhölzern auch aus mehreren verleimten bzw. verklebten Schichten bestehende Werkstoffe wie z.B. Brett-, Balken-, Furnier- und Spansperrholz sowie Brett-, Balken-, Furnier- und Spanschichtholz. Auch unterschiedlichste Holzfaserwerkstoffe werden verwendet.

Insbesondere hat in den letzten Jahren die Verwendung von Brettsperrholz (BSP) stark zugenommen, bei dem mehrere Brettschichten mit kreuzweise verlaufender Faserrichtung zu Plattenelementen miteinander verleimt bzw. verklebt werden.

Brettsperrholzelemente (BSP-Elemente) werden bei Gebäuden vorwiegend im Wand-, Decken- und Dachbereich eingesetzt und nehmen als scheiben- oder plattenbeanspruchte Bauteile Kräfte und Lasten quer oder längs der Plattenebene auf.

Die Fertigungstechnologie von BSP-Platten hat sich in den letzten Jahren enorm weiter entwickelt, und so sind heute BSP-Platten in Längen bis ca. 15 m, Breiten bis ca. 3,5 m und Stärken bzw. Dicken von wenigen Zentimetern bis ca. 35 cm und darüber erhältlich. Dies hat dazu geführt, dass im Holzbau - wie im Beton- und Stahlbau schon längst üblich, - vermehrt sogenannten Flachdecken Einzug halten. Dies sind Deckenkonstruktionen, bei denen die Deckenelemente ohne sogenannte Unterzüge (i.e. verstärkende Balken an der Unterseite) auf - vorzugsweise schlanken - Stützen punktgelagert werden. Bei Holzbaufachleuten und auch in den nachfolgenden Ausführungen wird unter Punktlagerung das Auflagern auf - verglichen mit den Abmessungen der aufzulagernden Bauelemente - relativ kleinen Auflagerflächen im Bereich von ca. 20 cm² bis ca. 0,5 m² verstanden.

Bei solchen sogenannten Punktlagerungen entstehen aufgrund der konzentrierten Lasteinleitung hohe Druckbeanspruchungen an den Auflagerpunkten bzw. Auflagerflächen. Bei der Verwendung besonders schlanker Stützen, die oft aus architektonischen Gründen bevorzugt werden, kann es somit zu hohen lokalen Belastungen kommen, bei denen die für das aufzulagernde Bauelement zulässigen Druckbeanspruchungen überschritten werden können, was zum Bauteilversagen beispielsweise in Form von Einstanzen, Durchstanzen, Rollschubversagen bis hin zum Bruch führen kann.

Aus der WO 2005/078202 A1 ist eine Verbindungsvorrichtung gemäß dem Oberbegriff des Anspruchs 1 bekannt, die Bestandteil eines Komponentensatzes ist, bei dem die aufzulagernden Holzbalken über Laschen mit einem Verbindungsknoten gegen Verrücken gesichert werden. Hier sind jedoch Stützkonsolen erforderlich, welche zwischen den Unterseiten der aufzulagernden Holzbalken und der Stütze angeordnet werden müssen, um die Vertikallasten der Balken in die Stütze einzuleiten.

Die Tragfähigkeit von Holz quer zur Faserrichtung beträgt nur einen Bruchteil (ca. ein Zehntel) der Tragfähigkeit in Faserrichtung. Neben der hohen Beanspruchung durch Druckkräfte quer zur Holzfaserrichtung treten an Punktlagerungen punktförmige Belastungen mit erhöhten Schubspannungen auf. Dabei wird ähnlich wie bei der Druckbeanspruchung die Schubbeanspruchbarkeit durch die Faserrichtung beeinflusst und beträgt quer zur Faserrichtung (=Rollschub) nur ca. 30 % von jener parallel zur Faserrichtung. Da Holzbauelemente wie z.B. Platten oder Balken für die Errichtung von Boden oder Deckenkonstruktionen bei der punktuellen Auflagerung auf Stützen im Auflagerbereich vorwiegend Druckbelastungen quer zur Faserrichtung ausgesetzt sind, spielt diese Werkstoffeigenschaft hier eine besonders große Rolle.

Zur besseren Kraft- bzw. Druckverteilung kann man beispielsweise vergrößerte Lagerkonsolen verwenden, indem man z.B. das Auflager am Stützenkopf "pilzförmig" ausgestaltet, um so die Auflagerfläche (i.e. die Lasteinleitungsfläche) zu vergrößern. Dies ist in vielen Fällen allerdings aus optischen oder konstruktiven Gründen nachteilig oder unerwünscht.

Ein weiterer bekannter Lösungsansatz besteht darin, in der Auflagerfläche Vollgewindeschrauben in das Holzbauelement zu drehen. Dadurch kann die Querdruckbelastbarkeit des Holzbauelementes erhöht werden, weil die zusätzlich angebrachten Vollgewindeschrauben eine Lastverteilung auf ein größeres Volumen im Holzbauelement erwirken. Bei Überlastung können jedoch die Schrauben in den Holzwerkstoff hinein gedrückt werden oder auch ausknicken.

Eine weitere bekannte Möglichkeit zur Verbesserung der Druck- und Schubfestigkeit des aufzulagernden Holzbauelements besteht darin, nicht nur in der Auflagerfläche Schrauben in das Holzbauelement zu drehen, sondern es auch in der Umgebung der Auflagerfläche mit schräg angebrachten, das Bauelement weitgehend durchsetzenden Schrauben zu versehen. Damit können "innere" Fachwerkstrukturen im Holzbauelement gebildet werden, welche die Belastbarkeit im Auflagerbereich weiter erhöhen. Die Wirkung ist jedoch auf einen relativ engen Bereich um die Auflagerfläche herum beschränkt, schwer zu quantifizieren und nur mit erhöhtem Montageaufwand zu realisieren.

Aufgrund dieser Unzulänglichkeiten des Standes der Technik sind dem Holzbau bis dato punktgelagerte Flachdeckenkonstruktionen mit wünschenswerten Stützenrastern von 5m x 5m oder mehr weitestgehend verwehrt.

Bei mehrstöckigen Bauwerken kommt erschwerend hinzu, dass die Stützen in unteren Stockwerken nicht nur die jeweilige Deckenkonstruktion tragen müssen, sondern auch die Gewichte der darüber liegenden Stockwerke, womit die unteren Geschossdecken an den Auflagerpunkten der Stützen rasch an ihre Belastungsgrenzen kommen.

### ZUSAMMENFASSUNG DER ERFINDUNG

Aufgabe der vorliegenden Erfindung ist es, eine Verbindungsvorrichtung der eingangs genannten Art zur Verfügung zu stellen, welche die oben genannten Nachteile wenigstens teilweise ausräumt, insbesondere indem sie das Punktlagern von Holzbauelementen auf Stützen ohne zusätzliche Unterzüge und/oder ohne vergrößerte Auflagerflächen ermöglicht und so dem Holzbau weitere Möglichkeiten erschließt.

Erfindungsgemäß wird dies durch die Merkmale von Patentanspruch 1 erreicht. Weitere Aspekte, Vorteile und Verbesserungen ergeben sich aus den Merkmalen der abhängigen Patentansprüche 2ff.

Nach einem ersten Aspekt stellt die vorliegende Erfindung eine Verbindungsvorrichtung zum Auflagern eines Holzbauelementes, insbesondere platten- oder balkenförmig, auf eine Stütze bereit, wobei die Verbindungsvorrichtung aufweist
- einen Auflagerknoten, der zum Auflagern der Verbindungsvorrichtung auf die Stütze ausgebildet ist,
- eine mit dem Auflagerknoten verbundene Koppelanordnung, die im Einbauzustand vom Auflagerknoten auskragend an einer Oberseite des Holzbauelementes mittels das Holzbauelement wenigstens teilweise durchsetzenden Befestigungsmitteln mit diesem verbindbar ist, wobei
der Auflagerknoten und die Koppelanordnung jeweils aus einem Material (z.B. Metall, insbesondere Stahl) gefertigt sind, das eine höhere Festigkeit aufweist als das des Holzbauelements.

Bei einer so ausgebildeten Verbindungsvorrichtung ist also der - aus belastbarem Material gefertigte - Auflagerknoten auf der Stütze aufgelagert, und die mit dem Auflagerknoten verbundene, längs der Oberseite des Holzbauelementes auskragende Koppelanordnung ist so ausgebildet, dass sie mit Befestigungsmitteln mit dem aufzulagernden Holzbauelement verbindbar ist, bzw. im Einbauzustand über ihre Unterseite (d.h. nach Montage der Befestigungsmittel) mit dem Holzbauelement an dessen Oberseite verbunden ist. Mit anderen Worten ausgedrückt ist im Einbauzustand das Holzbauelement hängend an der Koppeleinrichtung montiert, und die über die vergleichsweise kleine Auflagerfläche am Stützenkopf eingeleitete Stützkraft wird über die deutlich größere Fläche der auskragenden Koppeleinrichtung von oben - ergo als Zugkraft - ins Holzbauelement eingeleitet. Aus dieser Erklärung wird klar, dass die erfindungsgemäße Verbindungseinrichtung gegenüber der direkten Punktlagerung vorteilhaft ist, weil der an der kleinen Auflagerfläche resultierende hohe Stützdruck nur auf den belastbaren Koppelknoten wirkt und nicht auf das Holzbauelement. Am Holzbauelement wirkt nur der durch die größere Fläche der Koppeleinrichtung entsprechend verminderte Stütz-Zug. Dabei gilt weiter, dass -
- die Koppelanordnung und der Befestigungsmittelblock so ausgebildet sind, dass die Koppelanordnung mittels schrauben- stift- oder nagelförmigen Befestigungsmitteln, die den Befestigungsmittelblock durchsetzen, insbesondere mittels selbstbohrender Holzschrauben mit dem Holzbauelement verbindbar ist,
- der Befestigungsmittelblock eine oder mehrere Befestigungsmittelbohrungen aufweist, welche die Lage der Befestigungsmittelachsen im Wesentlichen (d.h. im Rahmen typischer Toleranzen) festlegen und wobei diese Befestigungsmittelbohrungen so ausgebildet sind, dass im Einbauzustand
- die Befestigungsmittelachse mit dem Normalvektor ***n*** der Unterseite der Koppelanordnung jeweils den Neigungswinkel *θ* einschließt, wobei *θ* im Bereich von 30° bis 60° liegt, insbesondere *θ* ca. 45° beträgt, und
- der Richtungsvektor ***s'*** der Projektion der Befestigungsmittelachse auf die - durch die Unterseite der Koppelanordnung definierte - Koppelebene mit dem in der Koppelebene liegenden Radialvektor ***r*** den Horizontalwinkel *ϕ* einschließt,
wobei der Radialvektor ***r*** vom in der Koppelebene gelegenen Zentrum ***O*** des Auflagerknotens zum Schnittpunkt ***P*** führt, in welchem die Befestigungsmittelachse die Koppelebene schneidet (d.h. ***r*** = ***P** -* **O**), und
wobei der Horizontalwinkel *ϕ* im Bereich von 0° bis ±180° (i.e. von 0° bis 360°) liegt, insbesondere *ϕ* Werte im Quadranten von -45° bis +45° bzw. im Quadranten von +135° bis -135° annimmt.

Ein weiterer Vorteil einer so ausgebildeten Verbindungsvorrichtung ist, dass sie so ausgeführt werden kann, dass an der Unterseite des Holzbauelementes außer der (schlanken) Stütze keine weiteren Komponenten sichtbar sind, was insbesondere bei modernen Flachdeckenkonstruktionen wünschenswert ist.

Selbstverständlich ist das Prinzip der Erfindung nicht nur auf Flachdecken mit BSP-Elementen beschränkt, sondern es können mit der erfindungsgemäßen Verbindungsvorrichtung Holzbauelemente aller Art, insbesondere platten- und balkenförmige Holzbauelemente, vorteilhaft aufgelagert werden.

Erfindungsgemäß ist vorgesehen, dass die Koppelanordnung im Einbauzustand - in der Draufsicht in Richtung der Stütze gesehen - die Stützenkopffläche (i.e. die Auflagerfläche) überragt. Dabei kann die Koppelanordnung in einer Vielfalt von vorteilhaften Formen ausgebildet sein: von kreisförmig, stern- oder speichenförmig - etwa in Form von vorzugsweise länglich ausgebildeten Bauteilen, die sich im Einbauzustand vom Auflagerknoten radial nach außen erstrecken und die im Folgenden als sogenannte Koppelfinger bezeichnet werden - bis hin zu jeder nur erdenklichen Freiform.

Als Befestigungsmittel kommen erfindungsgemäß grundsätzlich alle für das Verbinden von Holzbauelementen mit z.B. Metallbauteilen tauglichen und bekannten Verbindungs- bzw. Befestigungsmittel in Frage, wie z.B. schrauben-, stift-, streifen- oder nagelförmige Befestigungsmittel, die ins Holzbauelement eingeschraubt, eingeschlagen und/oder auch (zusätzlich) eingeklebt werden. Auch Klammern oder zusätzliche Beschläge, die mit dem Holzbauelement separat verbunden werden und bei denen die Verbindung zum erfindungsgemäßen Koppelelement z.B. über einen geeigneten Formschluss erfolgt, können vorgesehen werden. Auch reines Kleben ist denkbar und erfindungsgemäß vorgesehen.

In bevorzugten Ausführungsbeispielen ist vorgesehen, dass die Koppelanordnung zumindest einen (insbesondere länglich ausgebildeten) Koppelfinger aufweist, der mit dem Auflagerknoten über jeweils ein Gelenk schwenkbar verbunden ist und zwischen einer platzsparenden Ruhestellung (Verpackungs- bzw. Transportstellung) und einer Einbaustellung (i.e. die Arbeitsstellung im Einbauzustand) schwenkbar ist. Dadurch kann bei Verpackung, Lagerung und Transport Platz gespart werden, und die Handhabung bei der Montage auf der Baustelle wird deutlich erleichtert.

Die Koppelanordnung ist erfindungsgemäß so ausgebildet, dass sie im Einbauzustand mit ihrer Unterseite an der Oberseite des Holzbauelementes zu liegen kommt und mittels Befestigungsmitteln mit dem Holzbauelement verbindbar ist.

Es gibt Ausführungsbeispiele, bei denen die Koppelanordnung so ausgebildet ist, dass sie mittels schrauben- stift- oder nagelförmigen Befestigungsmitteln, insbesondere mittels vorzugsweise selbstbohrender Holzschrauben mit dem Holzbauelement verbindbar ist, da solche Befestigungsmittel bestens entwickelt und erforscht, sehr leistungsfähig, kostengünstig und in der Anwendung und Handhabung einfach und verlässlich sind.

Solche Befestigungsmittel haben einen länglich ausgebildeten, in das Holzbauelement eindringenden Schaft, der in der Regel eine rotationssymmetrische Umhüllende hat, und weisen somit eine Achse auf - im Folgenden Befestigungsmittelachse genannt. Im Holzbau üblich sind dabei z.B. selbstbohrende Holzschrauben, die in einer Fülle von für den jeweiligen Verwendungszweck optimierten Ausführungen und Spezifikationen bekannt sind (Vollgewindeschrauben, Teilgewindeschrauben, Doppelgewindeschrauben, vielfältige Gewinde-, Schaft- und Schraubenkopfspezifikationen, etc.).

Der Begriff "Holzschrauben" bezeichnet hier Schrauben für das Verbinden von aus Holz gefertigten Bauteilen bzw. Bauelementen.

Gemäß der Erfindung verlaufen die Befestigungsmittelachsen sowohl bezogen auf eine Oberfläche des Holzbauelementes und bezogen auf die radiale Richtung (i.e. die Richtung Auflagerknoten zum Punkt, an dem die Befestigungsmittelachse die Unterseite der Koppelanordnung durchdringt) "schräg", d.h. unter einem Neigungswinkel *θ* und einem Horizontalwinkel *ϕ.*

Der Neigungswinkel *θ* ist hier und im Folgenden folgendermaßen definiert: Der Neigungswinkel *θ* ist jener Winkel, den die Befestigungsmittelachse mit dem Normalvektor ***n*** der Unterseite der Koppelanordnung - welche im Einbauzustand parallel zur Oberseite des Holzbauelementes liegt - einschließt. Der Neigungswinkel *θ* beschreibt somit, um wieviel Grad schräg bezogen auf die Lotrechte zur Oberseite des Holzbauelementes die Befestigungsmittelachse geführt wird. Gemäß der Erfindung beträgt *θ* zwischen 30° bis 60°, insbesondere ca. 45°.

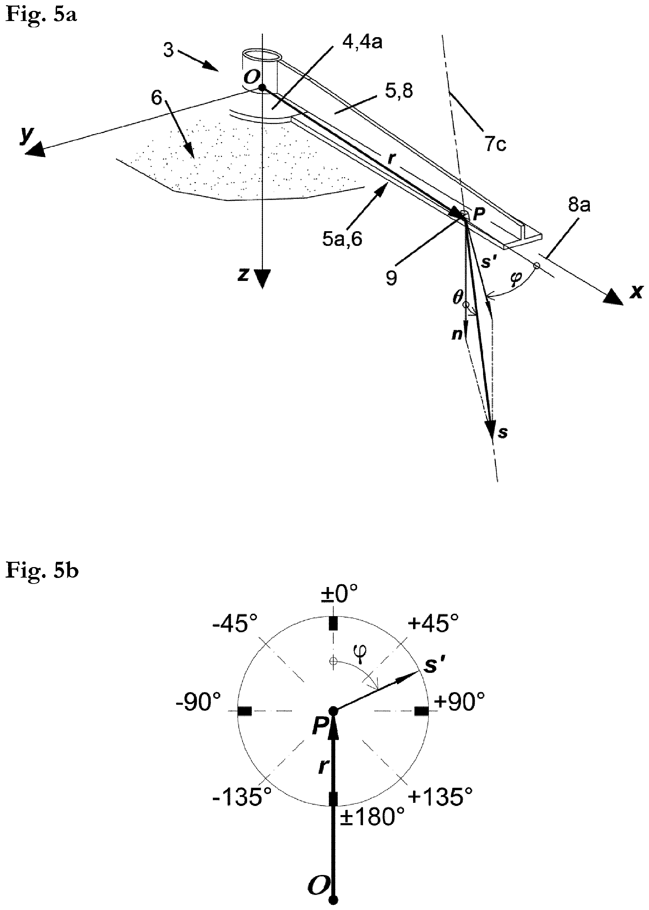

Der Horizontalwinkel *ϕ* wird hier und im Folgenden folgendermaßen definiert: Sei die Koppelebene die durch die Unterseite der Koppelanordnung aufgespannte Ebene, sei der Punkt ***O*** das in der Koppelebene gelegene Zentrum des Auflagerknotens, sei der Punkt ***P*** der Schnittpunkt, in welchem die Befestigungsmittelachse die Koppelebene schneidet, sei der Radialvektor ***r*** der Vektor, der vom Zentrum ***O*** zum Schnittpunkt ***P*** führt, und sei ***s**'* der Richtungsvektor der Projektion der Befestigungsmittelachse auf die Koppelebene, so ist der Horizontalwinkel *ϕ* jener Winkel, den der Richtungsvektor ***s'*** mit dem Radialvektor ***r*** einschließt. (Zur Veranschaulichung dieser Definition wird an dieser Stelle auf Fig. 5a und Fig. 5b verwiesen.)

Der Horizontalwinkel *ϕ* kann grundsätzlich jeden Wert im Bereich von zwischen 0° bis ±180° (i.e. von 0° bis 360°) annehmen. In manchen Ausführungsbeispielen der Erfindung sind Werte von *ϕ* Werte im Quadranten von -45° bis +45° bzw. im Quadranten von +135° bis -135° jedoch besonders bevorzugt.

Zugunsten leichterer Lesbarkeit und Verständlichkeit werden hier exemplarisch einige Vorteile von schräg geführten Befestigungsmittelachsen am konkreten Beispiel von Schrauben ausgeführt, sie gelten jedoch für alle genannten Befestigungsmittel, die eine "Befestigungsmittelachse aufweisen. Schrauben, die bezogen auf die Oberseite des Holzbauelementes schräg geführt werden, können länger sein, als rechtwinklig geführte, bevor sie das Holzbauelement an der Unterseite durchstoßen und halten somit besser. Mit schräg geführten Schrauben können ferner "innere Fachwerke" im Holzbauelement realisiert werden, was zu höherer Belastbarkeit führt. Mit schräg geführten Schrauben können ferner die Lasten in größere Volumina des Holzbauelementes geleitet werden, was ebenso zu höherer Belastbarkeit führt.

Zusammenfassend ist somit in weiteren vorteilhaften Ausführungsbeispielen der erfindungsgemäßen Verbindungsvorrichtung vorgesehen, dass
- die Koppelanordnung so ausgebildet ist, dass sie mittels schrauben- stift- oder nagelförmigen Befestigungsmitteln, insbesondere mittels vorzugsweise selbstbohrender Holzschrauben mit dem Holzbauelement verbindbar ist, und
- die Koppelanordnung Befestigungsmittelbohrungen aufweist, welche die Lage der Befestigungsmittelachsen im Wesentlichen (d.h. im Rahmen typischer Toleranzen) festlegen, und wobei diese Befestigungsmittelbohrungen so ausgebildet sind, dass im Einbauzustand
- die Befestigungsmittelachse mit dem Normalvektor ***n*** der Unterseite der Koppelanordnung jeweils den Neigungswinkel *θ* einschließt, wobei *θ* im Bereich von 30° bis 60° liegt, insbesondere *θ* ca. 45° beträgt, und
- der Richtungsvektor ***s'*** der Projektion der Befestigungsmittelachse auf die - durch die Unterseite der Koppelanordnung definierte - Koppelebene mit dem in der Koppelebene liegenden Radialvektor ***r*** den Horizontalwinkel *ϕ* einschließt,
   wobei der Radialvektor ***r*** vom in der Koppelebene gelegenen Zentrum ***O*** des Auflagerknotens zum Schnittpunkt ***P*** führt, in welchem die Befestigungsmittelachse die Koppelebene schneidet (d.h. ***r*** = ***P** - **O***), und
   wobei der Horizontalwinkel *ϕ* im Bereich von 0° bis ±180° (i.e. von 0° bis 360°) liegt, insbesondere *ϕ* Werte im Quadranten von -45° bis +45° bzw. im Quadranten von +135° bis -135° annimmt.

Bei solchen Ausführungsbeispielen, bei denen die Koppeleinrichtung so ausgeführt ist, dass sie mittels schrauben- stift- oder nagelförmigen Befestigungsmitteln (insbesondere mittels selbstbohrender Holzschrauben) mit dem Holzbauelement verbindbar ist, ist auch vorgesehen, dass die Führung der Befestigungsmittel (i.e. das Festlegen der Lage bzw. der vorhin genannten Winkel *θ* und *ϕ* der Befestigungsmittelachse) nicht durch die Koppeleinrichtung selbst erfolgt, sondern dass die erfindungsgemäße Verbindungsvorrichtung hierfür einen oder mehrere Befestigungsmittelblöcke aufweist, die im Einbauzustand an der Oberseite der Koppeleinrichtung zu liegen kommen oder a priori mit dieser verbunden sind. Dies ist von Vorteil, weil die Aufgabe der "Befestigungsmittelführung" so auf den Befestigungsmittelblock konzentriert werden kann, und jene Bereiche der Koppelanordnung, in denen keine Befestigungsmittel geführt werden, hinsichtlich des Verhältnisses von Gewicht bzw. Materialeinsatz zu Festigkeit optimiert werden können.

Ferner ist diese Ausführung mitunter fertigungsfreundlicher und damit kostengünstiger, weil beispielsweise die Koppelfinger z.B. aus durchgehenden Walz-, Strangpress- oder Blechbiegeprofilen (z.B. T-Profil, I-Profil, etc.) gefertigt werden können, und die Befestigungsmittelblöcke als separate Komponenten. Ein weiterer Vorteil ergibt sich, wenn die Befestigungsmittelblöcke *nicht* a priori mit der Koppeleinrichtung verbunden sind, sondern - wie erfindungsgemäß auch vorgesehen - separate Komponenten der Verbindungsvorrichtung sind, die erst im Einbauzustand an der Oberseite der Koppeleinrichtung zu liegen kommen: Dadurch ist es - wie weiter unten detaillierter ausgeführt - möglich, zwischen der Koppeleinrichtung und den Befestigungsblöcken Körperschalldämmelemente einzubringen bzw. vorzusehen.

In Zusammenschau dieser Erläuterungen betreffend die Befestigungsmittelblöcke mit den obigen Erläuterungen betreffend die Befestigungsmittelbohrungen bzw. -achsen, ist somit in weiteren Ausführungsbeispielen vorgesehen, dass die erfindungsgemäße Verbindungsvorrichtung
- zumindest einen Befestigungsmittelblock aufweist, der im Einbauzustand an der Oberseite der Koppelanordnung zu liegen kommt oder mit dieser a priori verbunden ist,

Es gibt Ausführungen, bei denen der Auflagerknoten (i.e. wie oben ausgeführt jene Komponente der Verbindungsvorrichtung, die auf der Stütze aufgelagert wird) aus folgenden (separaten) Komponenten besteht bzw. folgende Komponenten aufweist:
- einen Koppelknoten, mit dem die Koppelanordnung im Einbauzustand verbunden ist,
- einen im Einbauzustand nach unten ragenden unteren Stützkörper, der im Einbauzustand mit dem Koppelknoten verbunden ist und im Einbauzustand das Holzbauelement durchsetzt oder am Rand des Holzbauelementes zu liegen kommt,
- einen unteren Auflagerkörper, der im Einbauzustand mit dem unteren Stützkörper verbunden ist und zum Auflagern bzw. zur Montage auf die (untere) Stütze ausgebildet ist und der insbesondere auch so ausgebildet sein mag, dass er als Auflager für das Holzbauelement dienen mag.

Diese Aufgliederung des Auflagerknotens in die (separaten) Komponenten (Koppelknoten, unterer Stützkörper, unterer Auflagerknoten) hat beispielsweise Vorteile hinsichtlich der Fertigungsfreundlichkeit als auch hinsichtlich der Montagefreundlichkeit beim Einbau sowie weitere Vorteile, die weiter unten erläutert werden.

Es gibt Ausführungen, bei denen der Auflagerknoten folgende weitere Komponenten aufweist:
- einen im Einbauzustand nach oben ragenden oberen Stützkörper, der im Einbauzustand mit dem Koppelknoten verbunden ist,
- einen oberen Auflagerkörper, der im Einbauzustand mit dem oberen Stützkörper verbunden ist und zum Auflagern einer weiteren (i.e. oberen) Stütze ausgebildet ist.

Durch die Ausbildung mit oberem Stütz- und Auflagerkörper, ist es - z.B. für die Errichtung mehrstöckiger Bauwerke - möglich, eine weitere (obere) Stütze am Auflagerknoten aufzulagern, wobei nun die Lastdurchleitung von der unteren zur oberen Stütze vorteilhafterweise allein durch den - aus belastbarem Material wie z.B. Stahl gefertigten - Auflagerknoten erfolgt, und das vergleichsweise empfindliche Holzbauelement dadurch nicht belastet wird.

Bei den obigen Ausführungsbeispielen mit separaten Komponenten des Auflagerknotens (Koppelknoten, unterer/oberer Stützkörper, unterer/oberer Auflagerkörper) ist erfindungsgemäß auch vorgesehen, dass
- der Koppelknoten, der untere Stützkörper und der untere Auflagerkörper so ausgebildet sind, dass der Abstand zwischen Koppelknoten und unterem Auflagerkörper justierbar ist und/oder
- der Koppelknoten, der obere Stützkörper und der obere Auflagerkörper so ausgebildet sind, dass der Abstand zwischen Koppelknoten und oberem Auflagerkörper justierbar ist.

Dadurch können z.B. vor Ort auf der Baustelle Ungenauigkeiten ausgeglichen werden. Ferner kann dadurch mit der erfindungsgemäßen Verbindungsvorrichtung ein Verbindungssystem angeboten werden, das gleichermaßen für unterschiedlich dicke Holzbauteile geeignet ist, was sowohl aus der Sicht des Herstellers als auch aus Kundensicht vorteilhaft ist.

Es gibt Ausführungen, bei denen die Verbindungsvorrichtung so ausgebildet ist, dass zumindest zwei, insbesondere mehrere oder gar alle der im Einbauzustand miteinander verbundenen Komponenten bzw. Bauteile der Verbindungsvorrichtung jeweils lösbar miteinander verbindbar sind, insbesondere über Schraub-, Klemm-, Bolzen-, Splint- oder Bajonettverbindungen.

Dadurch kann die Verbindungsvorrichtung als modulares Verbindungssystem angeboten werden, bei dem die Komponenten als einzelne Module je nach Anwendungsfall kombiniert werden können, was sowohl aus der Sicht des Herstellers als auch aus Kundensicht vorteilhaft ist. Ferner ermöglicht diese lösbar verbindbare Ausbildung (i.e. die Zerlegbarkeit) platzsparende Verpackung für Lagerung und Transport, was einen weiteren Vorteil darstellt.

Gebäude mit Holzbauteilen haben zwar viele Vorteile gegenüber anderen Gebäudetypen (z.B. Stahlbau, Betonbau, Ziegelbau etc.), sind aber nachteiligerweise sehr kritisch betreffend Körperschallübertragung. Daher ist erfindungsgemäß ferner auch vorgesehen, dass die Verbindungsvorrichtung eine Körperschalldämmeinrichtung aufweist, die so ausgebildet ist, dass im Einbauzustand die Körperschallübertragung vom Holzbauelement über die Verbindungsvorrichtung zur unteren Stütze und/oder zur oberen Stütze - und damit zu weiteren Bauteilen des Bauwerks - gedämpft bzw. abgeschwächt ist. Naturgemäß wird dadurch selbstverständlich auch die Körperschallübertragung in umgekehrter Richtung gedämpft bzw. abgeschwächt.

Es gibt daher Ausführungen, bei denen im Einbauzustand zumindest ein Teil des Kraftflusses vom Holzbauelement über die Verbindungsvorrichtung zur unteren Stütze führt und/oder zumindest ein Teil des Kraftflusses vom Holzbauelement über die Verbindungsvorrichtung zur oberen Stütze über jeweils zumindest ein Dämmelement führt, das zur Dämpfung bzw. Abschwächung der Körperschallübertragung ausgebildet ist.

Für die Dämmelemente kommen prinzipiell alle Materialien in Frage, die hinsichtlich der Beaufschlagung mit Schallvibrationen eine (innere) Dämpfung aufweisen, die also zumindest einen Teil der Schallenergie, die ihnen zugeführt wird, in Wärme umwandeln, wie beispielsweise Kork, Gummi oder verschiedenste Kunststoffe, Elastomere und Verbundwerkstoffe. Ferner können die Dämmelemente auch als komplexere Vorrichtungen ausgebildet sein, wie z.B. als gedämpfte Federsysteme mit beispielsweise hydraulischen Dämpfungs-Elementen. solche gedämpften Federelemente können auch so konzipiert werden, dass sie auch im Infraschallbereich (i.e. bei Frequenzen unterhalb von 20 Hertz) dämpfend wirken und so z.B. die bei Erdbeben entstehenden Schwingungen dämpfen bzw. dissipieren.

In bevorzugten Ausführungsbeispielen ist vorgesehen, dass die erfindungsgemäße Verbindungsvorrichtung im Einbauzustand Folgendes aufweist:
- zumindest ein Dämmelement, das zwischen der Oberseite des Holzbauelementes und der Unterseite der Koppelanordnung angeordnet ist, und/oder
- zumindest ein Dämmelement, das zwischen der Oberseite der Koppelanordnung und der Unterseite des Befestigungsmittelblockes angeordnet ist, und/oder
- zumindest ein Dämmelement das zwischen der Unterseite des Holzbauelementes und dem unteren Auflagerkörper angeordnet ist, und/oder
- zumindest ein Dämmelement das zwischen dem Auflagerknoten und der der unteren Stütze bzw. zwischen dem unteren Auflagerkörper und der unteren Stütze angeordnet ist, und/oder
- zumindest ein Dämmelement, das zwischen dem Auflagerknoten und der oberen Stütze bzw. zwischen dem oberen Auflagerkörper und der oberen Stütze angeordnet ist.

Die Erfindung betrifft nicht nur die bisher erläuterte Verbindungsvorrichtung, sondern ferner auch eine Holzbauanordnung mit einer erfindungsgemäßen Verbindungsvorrichtung, mit einer (unteren) Stütze und mit einem Holzbauelement, welches insbesondere aus Brettsperrholz gefertigt sein mag, wobei diese Holzbauanordnung dadurch gekennzeichnet ist, dass die Verbindungsvorrichtung auf der Stütze aufgelagert ist und das Holzbauelement an der Verbindungsvorrichtung hängend montiert ist, bzw. die Verbindungsvorrichtung an der Oberseite des Holzbauelementes mit diesem verbunden ist. Selbstverständlich kommt hierbei als Stütze nicht nur eine aus Holz in Frage, sondern auch aus Stahl, Beton oder anderen tragfähigen Materialien.

Ferner betrifft die Erfindung auch ein Bauwerk mit einer solchen vorgenannten Holzbauanordnung.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die beigefügte Zeichnung beschrieben. Dabei zeigt:
- Fig. 1: schematisch dargestellt eine geschnittene Seitenansicht einer erfindungsgemäßen Verbindungsvorrichtung, aufgelagert auf die Stütze und verbunden mit dem Holzbauelement,
- Fig. 2: eine Schrägansicht einer erfindungsgemäßen Verbindungsvorrichtung mit kreisförmiger Kopplungsanordnung,
- Fig. 3: eine geschnittene Seitenansicht einer erfindungsgemäßen Verbindungsvorrichtung, bei der die Koppelanordnung schwenkbare Koppelfinger aufweist,
- Fig. 4: eine grob schematisch dargestellte Draufsicht auf ein weiteres Ausführungsbeispiel einer erfindungsgemäßen Verbindungsvorrichtung mit schwenkbaren Koppelfingern,
- Fig. 5a: eine schematisch dargestellte Schrägansicht eines Ausschnittes erfindungsgemäßen Verbindungsvorrichtung, bei der die Koppelanordnung so ausgebildet ist, dass sie mittels schrauben-, stift- oder nagelförmiger Befestigungsmittel mit dem Holzbauelement verbindbar ist, und bei der die Befestigungsmittelachse im Einbauzustand mit dem Neigungswinkel *θ* und mit dem Horizontalwinkel *ϕ* geführt wird,
- Fig. 5b: eine Draufsicht auf die in Fig. 5a dargestellten Punkte, Vektoren und Winkel zur verdeutlichenden Erläuterung des Horizontalwinkels *ϕ,*
- Fig. 6: eine grob schematisch dargestellte Draufsicht auf eine erfindungsgemäße Verbindungsvorrichtung, bei der die Koppelanordnung aus sechs sternförmig angeordneten Koppelfingern mit Befestigungsmittelblöcken gebildet wird,
- Fig. 7: eine Schrägansicht einer erfindungsgemäßen Verbindungsvorrichtung mit Koppelfingern wie in Fig. 6, wobei der Auflagerknoten hier einen Koppelknoten, einen unteren Stützkörper und einen unteren Auflagerkörper, sowie einen oberen Stützkörper und einen oberen Auflagerkörper aufweist,
- Fig.8: eine geschnittene Seitenansicht der Verbindungsvorrichtung gemäß Fig. 7 im Einbauzustand,
- Fig. 9: eine schematisch dargestellte Draufsicht auf verschiedene Anwendungsbeispiele bzw. zugehörige Ausführungsbeispiele der erfindungsgemäßen Verbindungsvorrichtung zum Auflagern von plattenförmigen Holzbauelementen,
- Fig. 10: eine grob schematisch dargestellte Draufsicht auf verschiedene Anwendungsbeispiele bzw. zugehörige Ausführungsbeispiele der erfindungsgemäßen Verbindungsvorrichtung zum Auflagern von balkenförmigen Holzbauelementen,
- Fig. 11: eine Schrägansicht einer erfindungsgemäßen Verbindungsvorrichtung ähnlich jener in Fig. 8, ausgebildet zum Auflagern eines plattenförmigen Holzbauelementes an einem Eck bzw. ausgebildet zum Auflagern von drei balkenförmigen Holzbauelementen, die paarweise einen Winkel von 45° einschließen,
- Fig. 12: eine Schrägansicht einer erfindungsgemäßen Verbindungsvorrichtung, ausgebildet zum Auflagern von zwei balkenförmigen Holzbauelementen, die in einer Flucht aneinander stoßen,
- Fig. 13a: eine geschnittene Seitenansicht einer erfindungsgemäßen Verbindungsvorrichtung im Einbauzustand mit mehreren Dämmelementen und.
- Fig. 13b: einen vergrößerten Detailausschnitt aus Fig. 13a im Bereich eines Befestigungsmittelblockes.

### BESCHREIBUNG VON AUSFÜHRUNGSFORMEN

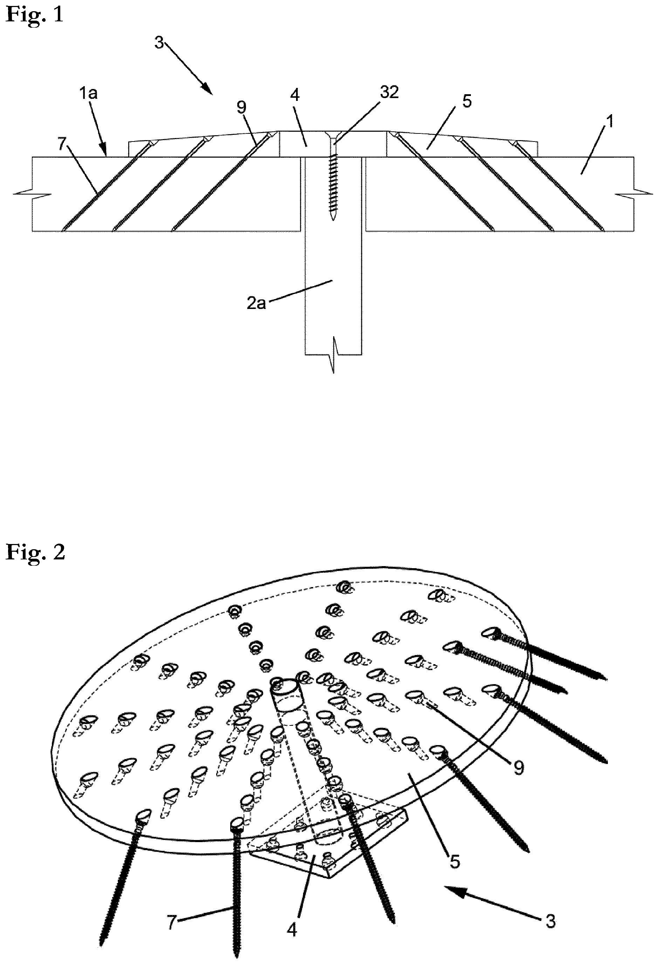

Fig. 1 zeigt grob schematisch dargestellt eine geschnittene Seitenansicht einer erfindungsgemäßen Verbindungsvorrichtung **3** im Einbauzustand, d.h. aufgelagert auf die Stütze **2a** und verbunden mit dem Holzbauelement **1.** Der Auflagerknoten **4** ist auf die obere Stirnfläche der Stütze **2a** aufgelagert und mit der Schraube **32** am Kopf der Stütze **2a** befestigt. (Selbstverständlich sind auch andere Möglichkeiten der Befestigung des Auflagerknotens **4** am Kopf der Stütze **2a** denkbar und vorgesehen.)

Mit dem Auflagerknoten **4** ist die Koppelanordnung **5** verbunden, die vom Auflagerknoten **4** auskragend im Einbauzustand mit ihrer Unterseite an der Oberseite **1a** des Holzbauelementes **1** zu liegen kommt und so ausgebildet ist, dass sie mittels Befestigungsmitteln **7** mit dem Holzbauelement **1** verbindbar ist. Hierbei kommen grundsätzlich alle für das Verbinden von Holzbauelementen mit z.B. Metallbauteilen tauglichen und bekannten Verbindungs- bzw. Befestigungsmittel in Frage, wie z.B. schrauben-, stift-, streifen oder nagelförmige Befestigungsmittel, die ins Holzbauelement eingeschraubt, eingeschlagen und/oder auch (zusätzlich) eingeklebt werden können. Auch Klammern oder zusätzliche Beschläge können vorgesehen werden, die mit dem Holzbauelement separat verbunden werden und die Verbindung zum erfindungsgemäßen Koppelelement z.B. über einen geeigneten Formschluss eingehen. Auch reines Kleben ist denkbar und erfindungsgemäß vorgesehen.

Im in Fig. 1 grob schematisch gezeigten Ausführungsbeispiel sind als Befestigungsmittel **7** insbesondere selbstbohrende Holzschrauben vorgesehen, die durch die Befestigungsmittelbohrungen **9** in das Holzbauelement **1** gedreht werden.

Fig. 1 zeigt, dass im Einbauzustand das Holzbauelement **1** an der Koppeleinrichtung **5** hängend montiert ist. Die Einleitung der nach oben wirkenden Stützkraft erfolgt über den aus belastbarem Material gefertigten Auflagerknoten **4.** Der an der vergleichsweise kleinen Auflagerfläche in den Auflagerknoten **4** eingeleitete Kraftfluss wird über die in einer größeren Fläche angeordneten Befestigungsmittel **7** (hier: Holzschrauben) in ein vergleichsweise großes Volumen des Holzbauelementes verteilt.

In Fig. 1 ist auch zu erkennen, dass an der Unterseite des Holzbauelementes keine weiteren Komponenten zu liegen kommen. Die an der Oberseite **1a** liegenden Komponenten werden z.B. bei Deckenkonstruktionen durch den Bodenaufbau des darüber liegenden Stockwerkes verdeckt.

Fig. 2 zeigt eine Schrägansicht einer erfindungsgemäßen Verbindungsvorrichtung **3,** wobei hier die Koppelanordnung **5** als einfach und kostengünstig herzustellende Kreisscheibe ausgebildet ist. Selbstverständlich sind auch andere, komplexer geformte Ausbildungen der Koppelanordnung **5** - bis hin zu jeder nur erdenklichen Freiform - erfindungsgemäß vorgesehen.

Die Koppelanordnung **5** soll jedoch im Einbauzustand (wenigstens mit Teilflächen an ihrer Unterseite) an der Oberseite **1a** des Holzbauelementes **1** anliegen und mit dem Holzbauelement **1** mittels Befestigungsmitteln **7** verbindbar sein. Auch im in Fig. 2 dargestellten Ausführungsbeispiel weist die Koppelanordnung **5** Befestigungsmittelbohrungen **9** auf, so dass sie mittels schrauben- stift- oder nagelförmigen Befestigungsmitteln **7** wie z.B. Holzschrauben mit dem (hier in Fig. 2 nicht gezeigten) Holzbauelement **1** verbindbar ist. Beim in Fig. 2 dargestellten Ausführungsbeispiel ist der Auflagerknoten **4** so ausgebildet, dass im Einbauzustand nicht die (hier nicht gezeigte) Stütze das Holzbauelement **1** durchdringt, sondern der Auflagerknoten **4**, **der besonders widerstandsfähig**

### ausgebildet sein kann.

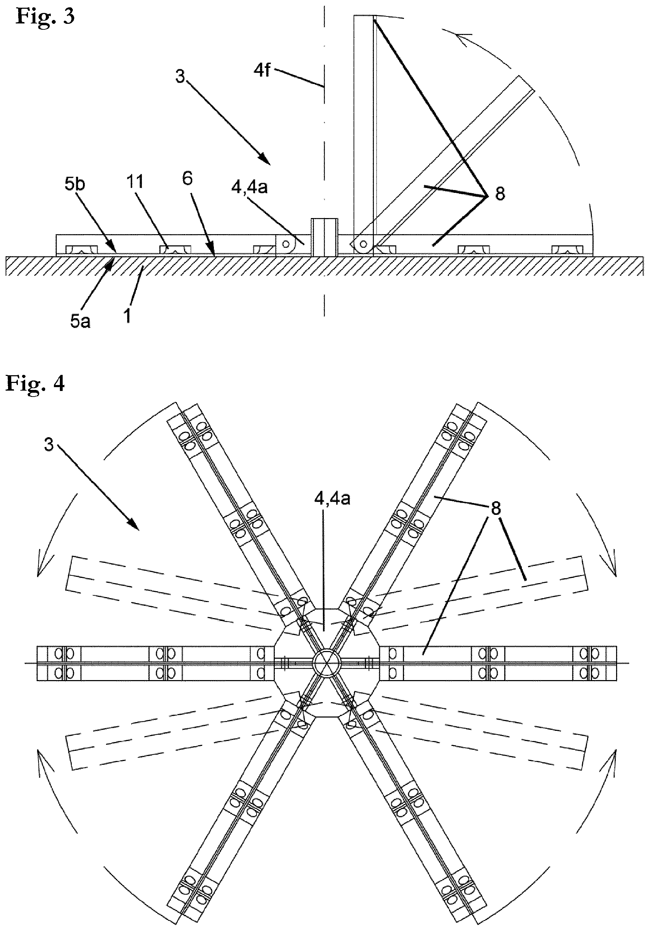

Fig. 3 zeigt eine geschnittene Seitenansicht einer erfindungsgemäßen Verbindungsvorrichtung **3,** bei der die Koppelanordnung **5** (länglich ausgebildete) Koppelfinger **8** aufweist, die mit dem Auflagerknoten **4** über jeweils ein Gelenk schwenkbar verbunden sind und zwischen einer platzsparenden Verpackungs- bzw. Transportstellung (Ruhestellung) und der Einbaustellung (i.e. die Arbeitsstellung im Einbauzustand) schwenkbar sind, was sowohl für Verpackung, Lagerung und Transport, als auch für die Handhabung und Montage vor Ort auf der Baustelle von Vorteil ist. In der Einbaustellung verlaufen die Koppelfinger **8** parallel zur Koppelebene **6.** In der Verpackungs- bzw. Transportstellung verlaufen die Koppelfinger 8 parallel zur Vertikalachse **4f** des Auflagerknotens **4,** und die Koppelfinger **8** können somit zu einem platzsparenden "Bündel" zusammengeklappt werden.

Fig. 4 zeigt ein weiteres Ausführungsbeispiel einer erfindungsgemäßen Verbindungsvorrichtung **3** mit schwenkbaren Koppelfingern **8.** Im Unterschied zu Fig. 3 verlaufen hier in Fig. 4 die Koppelfinger 8 nicht nur in der Einbaustellung, sondern auch in der Verpackungs- bzw. Transportstellung parallel zur Koppelebene. Die Koppelfinger **8** können jedoch auch hier so geschwenkt werden, dass sie in der Verpackungs- bzw. Transportstellung zueinander parallel als platzsparendes "Bündel" zu liegen kommen (gestrichelte Darstellung).

Fig. 5a zeigt eine Schrägansicht eines Ausschnittes einer erfindungsgemäßen Verbindungsvorrichtung **3.** Die Koppelanordnung **5** ist als Koppelfinger **8** ausgebildet. Die Koppelanordnung **5** bzw. der Koppelfinger **8** ist so ausgebildet, dass sie mittels schrauben- stift- oder nagelförmigen Befestigungsmitteln **7** mit dem Holzbauelement **1** verbindbar ist und weist eine Befestigungsmittelbohrung **9** auf, welche die Position, den Neigungswinkel *θ* und den Horizontalwinkel *ϕ* der Befestigungsmittelachse **7c** festlegt.

Der Richtungsvektor ***s*** der Befestigungsmittelachse **7c** schließt mit dem Normalvektor ***n*** zur Unterseite **5a** der Koppelanordnung **5** den Neigungswinkel *θ* ein.

Der Radialvektor ***r*** führt vom in der Koppelebene **6** gelegenen Zentrum ***O*** des Auflagerknotens **4** zum Schnittpunkt ***P***, in welchem die Befestigungsmittelachse **7c** die Koppelebene **6** schneidet (d.h. ***r*** = ***P** - **O***, wobei ***P*** und ***O*** die Ortsvektoren der genannten Punkte sind). Der Vektor ***s'*** ist die Projektion des Richtungsvektors ***s*** der Befestigungsmittelachse **7c** auf die Koppelebene **6,** und schließt mit dem Radialvektor ***r*** den Horizontalwinkel *ϕ* ein, der jeden Wert zwischen 0° und 360° annehmen kann. Ordnet man - wie gemeinhin üblich - *ϕ* im Uhrzeigersinn positive Werte zu und im Gegenuhrzeigersinn negative Werte, so kann also der Horizontalwinkel *ϕ* jeden Wert zwischen 0° und ±180° annehmen.

Fig. 5b zeigt schematisch die Projektion der in Fig. 5a dargestellten Punkte, Vektoren und Winkel auf die Koppelebene **6.** Die Zusammenschau von Fig. 5a mit Fig. 5b zeigt, dass der Horizontalwinkel *ϕ* alle Werte zwischen 0° und 360° bzw. zwischen 0° und ±180° annehmen kann. Wie weiter unten ausgeführt ist, können jedoch - insbesondere bei Ausführungsbeispielen, bei denen die Koppelanordnung **5** in Form von länglich ausgebildeten Koppelfingern **8** ausgebildet ist - die Horizontalwinkel *ϕ* Werte im Quadranten zwischen -45° und +45° bzw. im Quadranten zwischen +135° und -135° annehmen.

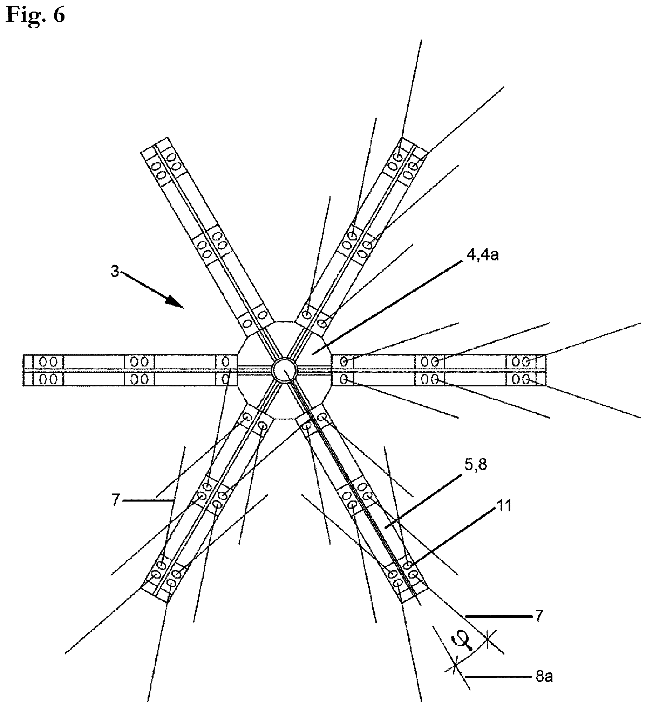

Fig. 6 zeigt eine Draufsicht auf eine erfindungsgemäße Verbindungsvorrichtung **3,** bei der die Koppelanordnung **5** aus sechs sternförmig angeordneten Koppelfingern **8** besteht, und die jeweils Befestigungsmittelblöcke **11** aufweisen. Im Einbauzustand durchsetzen die Befestigungsmittel **7** die Befestigungsmittelblöcke **11,** die so ausgebildet sind, dass sie die Lage der Befestigungsmittelachsen **7c** bzw. den jeweiligen Neigungswinkel *θ* und den jeweiligen Horizontalwinkel *ϕ* - im Wesentlichen (d.h. im Rahmen typischer Toleranzen) festlegen. In dieser Abbildung Fig. 6 sind die Befestigungsmittel 7 (bzw. die Befestigungsmittelachsen **7c)** als Striche vereinfacht symbolisiert dargestellt.

Die gezeigte Anordnung, in der die Befestigungsmittel 7 nicht unterhalb der (vergleichsweise schmalen) Koppelfinger 8 verlaufen, sondern gegenüber den Längsachsen **8a** der Koppelfinger jeweils um einen Horizontalwinkel *ϕ* "verdreht" sind (d.h. *ϕ* ungleich 0° und ungleich ±180°, bewirken eine breiter verteilte Lasteinleitung über die Befestigungsmittel 7 in das Holzbauelement **1** in einen Volumenbereich, der deutlich größer ist, als jener, der unmittelbar unterhalb der Koppelfinger **8** liegt.

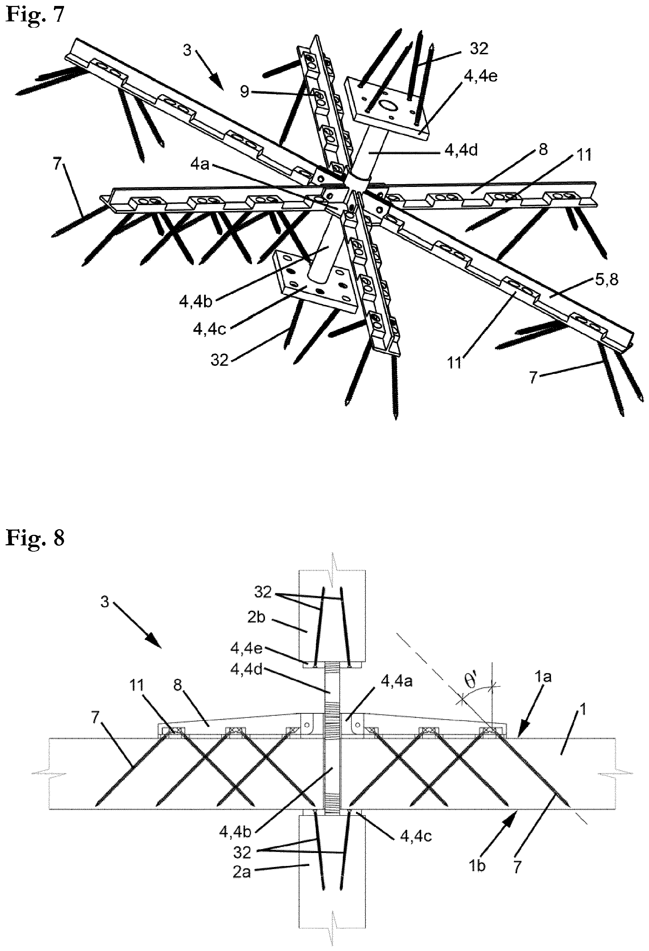

Fig. 7 zeigt eine Schrägansicht einer erfindungsgemäßen Verbindungsvorrichtung **3** mit Koppelfingern 8 wie in Fig. 6. Im hier in Fig. 7 gezeigten Ausführungsbeispiel weist der Auflagerknoten **4** Folgendes auf:
- einen Koppelknoten **4a,** mit dem die Koppelanordnung **5** (bzw. hier: Koppelfinger **8)** verbunden ist,
- einen im Einbauzustand nach unten ragenden unteren Stützkörper **4b,** der im Einbauzustand mit dem Koppelknoten **4a** verbunden ist,
- einen unteren Auflagerkörper **4c,** der im Einbauzustand mit dem unteren Stützkörper **4b** verbunden ist und zum Auflagern bzw. zur Montage auf die (untere) Stütze **2a** ausgebildet ist.
- einen im Einbauzustand nach oben ragenden oberen Stützkörper **4d,** der im Einbauzustand mit dem Koppelknoten **4a** verbunden ist,
- einen oberen Auflagerkörper **4c,** der im Einbauzustand mit dem oberen Stützkörper **4d** verbunden ist und zum Auflagern bzw. zur Montage auf die obere Stütze **2a** ausgebildet ist.

Im in Fig. 7 gezeigten Ausführungsbeispiel sind der untere Auflagerkörper **4c** und der obere Auflagerkörper **4e** ferner so ausgebildet, dass sie mit - bezogen auf die jeweilige Auflagerfläche - schräg geführten Schrauben **32** mit der jeweiligen Stütze **2a,2b** verbunden werden können.

Fig. 7 zeigt auch, dass die schräg geführten Befestigungsmittel 7 (hier: Holzschrauben) außerhalb jener Volumina zu liegen kommen, die unterhalb der - vergleichsweise schmalen - Koppelfinger liegen, was die Lasteinleitung ins (hier nicht gezeigte) Holzbauelement **1** verbessert ist.

Fig. 8 zeigt eine geschnittene Seitenansicht einer Verbindungsvorrichtung **3** ähnlich jener in Fig. 7 im Einbauzustand. Der Auflagerknoten **4** bzw. in diesem Fall seine Komponente Auflagerkörper **4c** ist auf der unteren Stütze **2a** aufgelagert und mit den Schrauben **32** am Kopf der unteren Stütze **2a** montiert.

Der untere Stützkörper **4b** ist mit dem Auflagerkörper **4c** über eine Schraubverbindung lösbar verbunden. Der untere Stützkörper durchsetzt das Holzbauelement **1** und ist mit dem Koppelknoten **4a** über eine Schraubverbindung lösbar verbunden. Der Koppelknoten **4a** ist mit dem unteren Stützkörper **4b** über eine Schraubverbindung lösbar verbunden und ragt nach oben zum oberen Auflagerkörper **4e,** der mit dem oberen Stützkörper über eine Schraubverbindung lösbar verbunden ist.

Am oberen Auflagerkörper **4e** ist die obere Stütze **2b** aufgelagert und mit Schrauben **32** montiert. Mit dem Koppelknoten **4a** sind die Koppelfinger **8** verbunden, die an der Oberseite des Holzbauelements **1** zu liegen kommen und ihrerseits mit den Befestigungsmitteln 7 (hier: selbstbohrende Holzschrauben) mit dem Holzbauelement **1** verbunden sind. Der hier in Fig. 8 gezeigte Winkel *θ'* ist die Projektion des Neigungswinkels *θ* der Befestigungsmittelachse auf die Bild- bzw. Schnittebene der Abbildung.

Es ist auch möglich, dass der untere Auflagerkörper **4c** und/oder der obere Auflagerkörper **4e** so ausgebildet sind, dass sie keiner Fixierung an der jeweiligen Stütze **2a,2b** durch die Schrauben **32** oder durch andere Befestigungsmittel bedürfen. Dies kann beispielsweise dadurch erreicht werden, dass die Auflagerkörper **4c,4e** so ausgebildet sind, dass sie durch einen seitlichen Formschluss mit der jeweiligen Stütze **2a,2b** lateral, zur Stützenachse fixiert sind, z.B. über einen den Stützenkopf umfassenden Kragen oder in den Kopf eindringende Dorne. Einer vertikalen Fixierung bedarf es aufgrund der in Bauwerken auftretenden Gewichtskräfte in vielen Fällen nicht.

Im in Fig. 8 gezeigten Ausführungsbeispiel ist der untere Auflagerkörper **4c** so ausgebildet, dass er nicht nur zum Auflagern auf die untere Stütze **2a** oder als ein Fundament dient, sondern seinerseits auch als Auflager für das Holzbauelement **1.** Dies ist - in Zusammenschau mit dem vorhin beschriebenen Sachverhalt, dass die Komponenten **4a-4e** des Auflagerknotens **4** lösbar miteinander verbindbar sind - besonders vorteilhaft hinsichtlich der Montage: Zuerst werden der untere Auflagerkörper **4c** und der untere Stützkörper **4b** am Kopf der Stütze **2a** montiert. Hernach kann das Holzbauelement **1** am unteren Auflagerkörper **4c** provisorisch aufgelagert werden und befindet sich ohne Zuhilfenahme von z.B. Hilfsstützen oder -gerüsten bereits in der Einbauposition. Hernach wird von oben der Koppelknoten **4a** mit der Koppelanordnung **5** am unteren Stützkörper **4b** montiert und hernach die Koppelanordnung **5** mit dem Holzbauelement **1** verbunden. Diese Möglichkeit der Montage von oben und ohne z.B. Hilfsstützen ist speziell bei Deckenkonstruktionen wesentlich bequemer und sicherer, als jedwede Montage von unten.

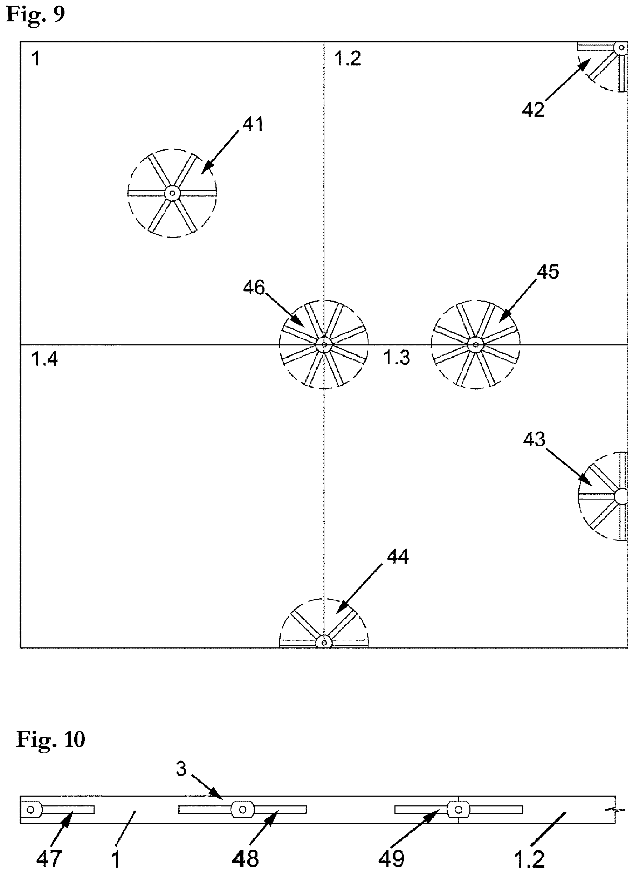

Fig. 9 zeigt in einer grob schematischen Draufsicht verschiedene Anwendungsbeispiele bzw. zugehörige Ausführungsbeispiele der erfindungsgemäßen Verbindungsvorrichtung **3** zum Auflagern von plattenförmigen Holzbauelementen - im Folgenden "Platten" genannt:
- Pfeil **41** zeigt auf ein erfindungsgemäßes Auflager in der Plattenmitte von Platte **1.**
- Pfeil **42** zeigt auf ein erfindungsgemäßes Auflager am Eck der Platte **1.2.**
- Pfeil **43** zeigt auf ein erfindungsgemäßes Auflager an einer Kante der Platte **1.3.**
- Pfeil **44** zeigt auf ein erfindungsgemäßes Auflager am an der Kante gelegenen T-Stoß der Platten **1.3** und **1.4.**
- Pfeil **45** zeigt auf ein erfindungsgemäßes Auflager am Längsstoß der Platten **1.2** und **1.3.**
- Pfeil **46** zeigt auf ein erfindungsgemäßes Auflager am Eck der vier Platten **1, 1.2, 1.3** und **1.4.** Aus dieser Darstellung wird klar, dass mit der erfindungsgemäßen Verbindungsvorrichtung nicht nur eine, sondern auch mehrere Platten aufgelagert werden können, und dass bei Ausführungen mit unterem Stützkörper **4b** dieser Stützkörper **4b** das Holzbauelement **1** nicht zwingend durchsetzt, sondern auch an einem Rand (incl. Eck) des Holzbauelementes **1** zu liegen kommen kann.

Fig. 10 zeigt in einer grob schematischen Draufsicht verschiedene Anwendungsbeispiele bzw. zugehörige Ausführungsbeispiele der erfindungsgemäßen Verbindungsvorrichtung **3** zum Auflagern von balkenförmigen Holzbauelementen - im Folgenden "Balken" genannt:
- Pfeil **47** zeigt auf ein erfindungsgemäßes Auflager am linken Ende von Balken **1.**
- Pfeil **48** zeigt auf ein erfindungsgemäßes Auflager ca. in der Mitte von Balken **1.**
- Pfeil **49** zeigt auf ein erfindungsgemäßes Auflager am Stoß von Balken **1** und Balken **1.2.**

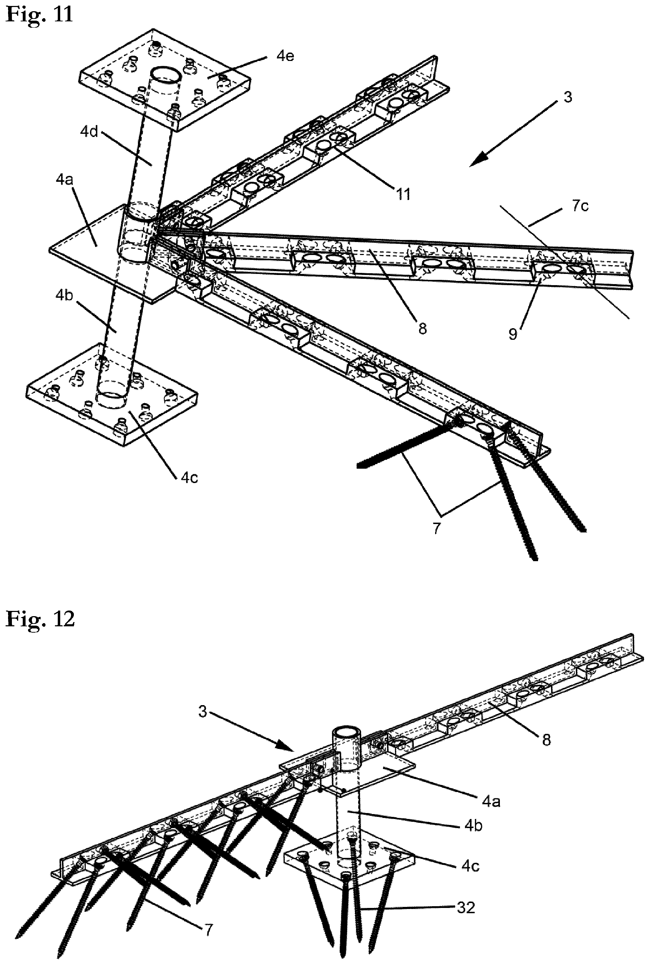

Fig. 11 zeigt eine Schrägansicht einer erfindungsgemäßen Verbindungsvorrichtung **3,** ähnlich jener in Fig. 7 ausgebildet, zum Auflagern eines plattenförmigen Holzbauelementes an einem Eck bzw. ausgebildet zum Auflagern von drei balkenförmigen Holzbauelementen, die jeweils paarweise einen Winkel von 45° einschließen.

Fig. 12 zeigt eine Schrägansicht einer erfindungsgemäßen Verbindungsvorrichtung **3,** ausgebildet zum Auflagern von zwei balkenförmigen Holzbauelementen, die in einer Flucht aneinander stoßen.

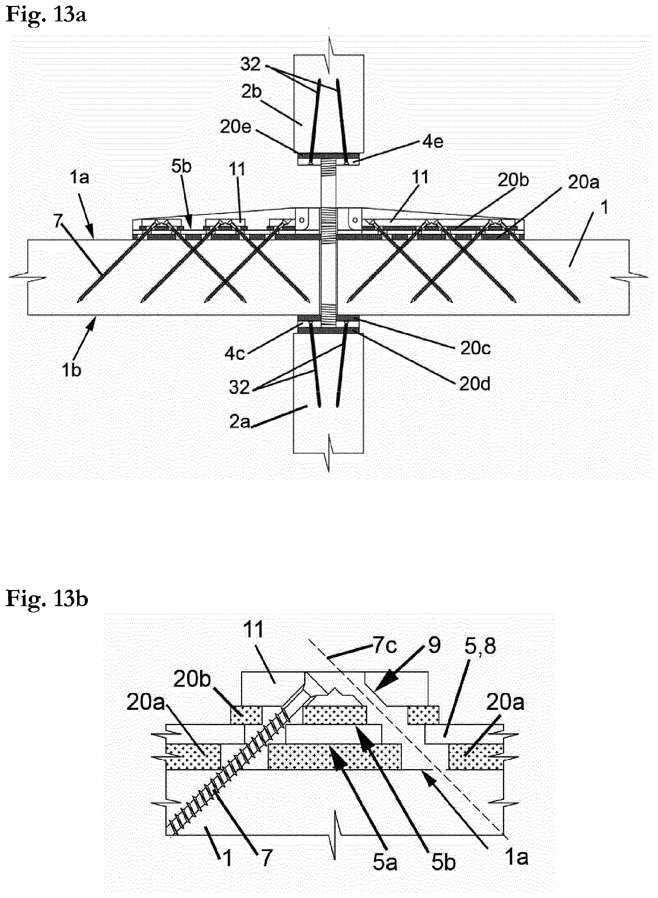

Fig. 13a zeigt eine geschnittene Seitenansicht einer erfindungsgemäßen Verbindungsvorrichtung im Einbauzustand, die Dämmelemente **20a-20e** aufweist.

Fig. 13b zeigt einen vergrößerten Detailausschnitt von Fig. 13a in der Umgebung eines Befestigungsmittelblockes **11.**

Fig. 13a und 13b zeigen, dass die Koppelanordnung **5** über die Dämmelemente **20b** und **20c** quasi "schwimmend gelagert" zwischen den Befestigungsmittelblöcken **11** und dem Holzbauelement **1** zu liegen kommt. Die Koppelanordnung **5** ist so nicht *rigide* bzw. *starr* mit Holzbauelement **1** verbunden ist, sondern *gedämpft elastisch* und daher schalldämmend..

In der vorliegenden Anmeldung incl. Patentansprüchen sind mit den Begriffen "verbinden", "verbunden sein", "Verbindung" nicht nur rigide bzw. starre, sondern auch gedämpft elastische Verbindungen. zwischen den jeweiligen Bauteilen/Komponenten gemeint. Dasselbe gilt analog auch für die Begriffe "montieren", "Montage", "auflagern", "Auflager", "befestigen" und "Befestigung".

Aus der Zusammenschau der bisherigen Erläuterungen und aller Figuren geht ferner hervor:
- Die Ausformung der Komponenten der Erfindung ist nicht auf die in den Figuren gezeigten einfachen Formen beschränkt.
- Insbesondere die Koppelanordnung **5** bzw. die Koppelfinger **8** können vielfältig ausgeformt sein und können insbesondere hinsichtlich ihrer Tragfähigkeit bzw. hinsichtlich des Verhältnisses von Materialeinsatz zu Tragfähigkeit in vielfältiger Weise optimiert werden.
- Die Erfindung kann so ausgeführt werden, dass sie in alle ihre Einzelkomponenten zerlegbar ist.
- Die Befestigungsmittelblöcke **11** müssen nicht unbedingt a priori mit der Koppelanordnung **5** bzw. mit den Koppelfingern **8** verbunden sein, sondern können als separate Bauteile ausgebildet sein, die erst im Einbauzustand erfindungsgemäß zu liegen kommen.
- Auch die Dämmelemente **20a-20e.** müssen nicht a priori mit anderen Komponenten verbunden sein, sondern können als separate Bauteile ausgebildet sein, die erst im Einbauzustand erfindungsgemäß zu liegen kommen.

Aus Gründen der Einfachheit der Darstellung wurde in allen Erläuterungen und Figuren die Oberseite **1a** des Holzbauelementes **1** als durchgehend ebene Fläche angenommen. Selbstverständlich ist es beispielsweise auch möglich, im Holzbauelement Ausnehmungen vorzusehen, die einen versenkten Einbau der Koppelanordnung **5** ermöglichen.

Ferner ist auch vorgesehen, die Verbindungsanordnung so auszubilden, dass in Fachkreisen so genannter "überhöhter Einbau" ermöglicht wird: Hierbei ist die Koppelanordnung **5** so ausgebildet, dass sich ihre Unterseite **5a** vor der Montage der Befestigungsmittel **7** noch nicht an das Holzbauelement **1** anschmiegt, sondern erst durch die montierten Befestigungsmittel **7** zum Anschmiegen gezwungen wird. Dadurch ist es möglich, Spannungen ins Holzbauelement **1** einzubringen, die beispielsweise dem gewichtsbedingten Durchhang zwischen zwei Auflagern entgegen wirken.

### BEZUGSZEICHENLISTE

- **1**: Holzbauelement
- **1a**: Oberseite **1a** des Holzbauelementes **1**
- **1b**: Unterseite **1b** des Holzbauelementes **1**
- **1.2**: zweites Holzbauelement
- **1.3**: drittes Holbauelement
- **1.4**: viertes Holzbauelement
- **2a**: (untere) Stütze
- **2b**: weitere, obere Stütze
- **3**: Verbindungsvorrichtung
- **4**: Auflagerknoten
- **4a**: Koppelknoten
- **4b**: unterer Stützkörper
- **4c**: unterer Auflagerkörper
- **4d**: oberer Stützkörper
- **4e**: oberer Auflagerkörper
- **4f**: Vertikalachse des Auflagerknotens **4**
- **5**: Koppelanordnung
- **5a**: Unterseite **5a** der Koppelanordnung **5**
- **5b**: Oberseite **5b** der Koppelanordnung **5**
- **6**: Koppelebene (definiert durch Unterseite **5a** der Koppelanordnung **5** bzw. im Einbauzustand durch die Oberseite **1a** des Holzbauelementes **1**)
- **7**: Befestigungsmittel
- **7a**: Koppelsegment des Befestigungsmittels **7**
- **7b**: Befestigungsmittelkopf
- **7c**: Befestigungsmittelachse
- **8**: Koppelfinger
- **8a**: Längsachse **8a** des Koppelfingers **8**
- **9**: Befestigungsmittelbohrung (f. Befestigungsmittel **7**)
- **10**: Kopfaufnahme (f. Kopf des Befestigungsmittels **7**)
- **11**: Befestigungsmittelblock
- **11a**: Unterseite **11a** des Befestigungsmittelblockes **11**
- **11b**: Oberseite **11b** des Befestigungsmittelblockes **11**
- **20a-e**: Dämmelement
- **32**: Schraube (zum Montieren der Auflagerkörper **4c, 4e** an den Stützen **2a, 2b**)
- **41-46**: Ausführungs- und Anwendungsbeispiel zum Auflagern von plattenförmigen Holzbauelementen **1**
- **47-49**: Ausführungs- und Anwendungsbeispiel zum Auflagern von balkenförmigen Holzbauelementen **1**

- *θ*: Neigungswinkel *θ* der Befestigungsmittelachse **7c**
- *θ*': Projektion *θ'* des Neigungswinkels *θ* auf die Bildebene der jeweiligen Fig.
- *ϕ*: Horizontalwinkel *ϕ* der Befestigungsmittelachse **7c**
- ***n***: Normalvektor ***n*** auf die Unterseite **5a** der Koppelanordnung **5**
- ***O***: in der Koppelebene **6** gelegenes Zentrum ***O*** des Auflagerknotens **4** (Ortsvektor)
- ***P***: Schnittpunkt zwischen Befestigungsmittelachse **7c** und Koppelebene **6** (Ortsvektor)
- ***r***: Radialvektor ***r***, führt von ***O*** nach ***P*** (i.e. ***r*** = ***P** - **O***)
- ***s***: Richtungsvektor ***s*** der Befestigungsmittelachse **7c**
- ***s'***: Richtungsvektor ***s'*** der Projektion der Befestigungsmittelachse **7c** auf die Koppelebene **6**

## Patentansprüche

1. Verbindungsvorrichtung **(3)** zum Auflagern eines Holzbauelementes **(1),** insbesondere platten- oder balkenförmig, auf eine Stütze **(2a),** wobei die Verbindungsvorrichtung **(3)** aufweist
- einen Auflagerknoten **(4),** der zum Auflagern der Verbindungsvorrichtung **(3)** auf die Stütze **(2a)** ausgebildet ist,
- eine mit dem Auflagerknoten **(4)** verbundene Koppelanordnung **(5),** die im Einbauzustand vom Auflagerknoten **(4)** auskragend an einer Oberseite (**1a**) des Holzbauelementes (**1**) mittels das Holzbauelement **(1)** wenigstens teilweise durchsetzenden Befestigungsmitteln **(7)** mit diesem verbindbar ist, wobei
der Auflagerknoten **(4)** und die Koppelanordnung **(5)** jeweils aus einem Material gefertigt sind, das eine höhere Festigkeit aufweist als das des Holzbauelements (1), und wobei
- die Koppelanordnung **(5)** so ausgebildet ist, dass sie mittels schrauben- stift- oder nagelförmigen Befestigungsmitteln **(7),** insbesondere eine selbstbohrende Holzschraube, mit dem Holzbauelement **(1)** jeweils entlang einer Befestigungsmittelachse (7c) verbindbar ist,
- die Koppelanordnung **(5)** Befestigungsmittelbohrungen **(9)** aufweist, welche die Lage und Richtung der Befestigungsmittelachsen **(7c)** bestimmen, **dadurch gekennzeichnet, dass** diese Befestigungsmittelbohrungen **(9)** so ausgebildet sind, dass im Einbauzustand
- die Befestigungsmittelachse **(7c)** mit einem von der Unterseite **(5a)** der Koppelanordnung **(5)** ausgehenden Normalvektor ***n*** jeweils einen Neigungswinkel *θ* einschließt, der 30° bis 60° oder ca. 45° beträgt, und
- ein Richtungsvektor ***s'*** der Projektion der Befestigungsmittelachse **(7c)** auf eine durch die Unterseite **(5a)** der Koppelanordnung **(5)** definierte Koppelebene **(6)** mit einem in der Koppelebene **(6)** liegenden Radialvektor ***r*** einen Horizontalwinkel *ϕ* einschließt,
wobei der Radialvektor ***r*** von einem in der Koppelebene **(6)** gelegenen Zentrum ***O*** des Auflagerknotens **(4)** zu einem Schnittpunkt ***P*** führt, in welchem die Befestigungsmittelachse **(7c)** die Koppelebene **(6)** schneidet, und
- wobei der Horizontalwinkel *ϕ* 0° bis +-180° oder 45° bis 135° oder -45° bis -135° beträgt.

2. Verbindungsvorrichtung **(3)** nach Anspruch 1, wobei die Koppelanordnung **(5)** zumindest einen Koppelfinger (8) aufweist, der verstellbar mit dem Auflagerknoten **(4),** insbesondere über ein Gelenk schwenkbar, verbunden ist und zwischen einer platzsparenden Ruhestellung und einer Arbeitsstellung verstellbar ist.

3. Verbindungsvorrichtung **(3)** nach einem der vorhergehenden Ansprüche, wobei die Verbindungsvorrichtung **(3)** zumindest einen Befestigungsmittelblock **(11)** aufweist, der im Einbauzustand an einer Oberseite **(5b)** der Koppelanordnung **(5)** angeordnet ist,
und eine oder mehrere Befestigungsmittelbohrungen **(9)** aufweist, welche die Lage und Richtung der Befestigungsmittelachsen **(7c)** bestimmen.

4. Verbindungsvorrichtung **(3)** nach einem der vorgehenden Ansprüche, wobei der Auflagerknoten **(4)** aufweist
- einen Koppelknoten **(4a),** mit dem die Koppelanordnung **(5)** im Einbauzustand verbunden ist,
- einen im Einbauzustand nach unten ragenden unteren Stützkörper **(4b),** der im Einbauzustand mit dem Koppelknoten **(4a)** verbunden ist und das Holzbauelement (1) durchsetzt,
- einen unteren Auflagerkörper **(4c),** der im Einbauzustand mit dem unteren Stützkörper **(4b)** verbunden ist und zum Auflagern bzw. zur Montage auf die Stütze **(2a)** ausgebildet ist..

5. Verbindungsvorrichtung **(3)** nach Anspruch 4, wobei der Auflagerknoten **(4)** ferner aufweist
- einen im Einbauzustand nach oben ragenden oberen Stützkörper **(4d),** der im Einbauzustand mit dem Koppelknoten **(4a)** verbunden ist,
- einen oberen Auflagerkörper **(4e),** der im Einbauzustand mit dem oberen Stützkörper **(4d)** verbunden ist und zum Auflagern einer weiteren Stütze **(2b)** ausgebildet ist.

6. Verbindungsvorrichtung **(3)** nach Anspruch 4 oder 5, wobei
- der Koppelknoten **(4a),** der untere Stützkörper **(4b)** und der untere Auflagerkörper **(4c)** so ausgebildet sind, dass der Abstand zwischen Koppelknoten **(4a)** und unterem Auflagerkörper **(4c)** justierbar ist und/oder
- der Koppelknoten **(4a),** der obere Stützkörper **(4d)** und der obere Auflagerkörper **(4e)** so ausgebildet sind, dass der Abstand zwischen Koppelknoten **(4a)** und oberem Auflagerkörper **(4e)** justierbar ist.

7. Verbindungsvorrichtung **(3)** nach einem der vorgehenden Ansprüche, wobei mehrere der im Einbauzustand miteinander verbundenen Komponenten bzw. Bauteile der Verbindungsvorrichtung **(3)** jeweils lösbar miteinander verbindbar sind, insbesondere über Schraub-, Klemm-, Bolzen-, Splint- oder Bajonettverbindungen.

8. Verbindungsvorrichtung **(3)** nach einem der vorgehenden Ansprüche, wobei die Verbindungsvorrichtung **(3)** eine Körperschalldämmeinrichtung (20a - 20e) aufweist., die so ausgebildet ist, dass im Einbauzustand die Körperschallübertragung vom Holzbauelement **(1)** über die Verbindungsvorrichtung **(3)** zur unteren Stütze **(2a)** und/oder zur oberen Stütze **(2b)** gedämpft bzw. abgeschwächt ist.

9. Verbindungsvorrichtung **(3)** nach einem der vorgehenden Ansprüche, wobei die Verbindungsvorrichtung **(3)** so ausgebildet ist, dass im Einbauzustand zumindest ein Teil des Kraftflusses jeweils über zumindest ein Dämmelement **(20a-20e)** führt, das zur Dämmung bzw. Abschwächung der Körperschallübertragung ausgebildet ist.

10. Verbindungsvorrichtung **(3)** nach einem der vorgehenden Ansprüche, wobei die Verbindungsvorrichtung **(3)** im Einbauzustand wenigstens eines der folgenden Dämmelemente (20a-20e) aufweist
- ein Dämmelement **(20a),** das zwischen der Oberseite (**1a**) des Holzbauelementes **(1)** und der Unterseite **(5a)** der Koppelanordnung **(5)** angeordnet ist und/oder
- ein Dämmelement **(20b),** das zwischen der Oberseite **(5b)** der Koppelanordnung **(5)** und einer Unterseite (**11a**) des Befestigungsmittelblockes **(11)** angeordnet ist und/oder
- ein Dämmelement **(20c),** das zwischen der Unterseite (**1b**) des Holzbauelementes **(1)** und dem unteren Auflagerkörper **(4c)** angeordnet ist und/oder
- ein Dämmelement **(20d),** das zwischen dem Auflagerknoten **(4)** und der der unteren Stütze **(2a)** bzw. zwischen dem unteren Auflagerkörper **(4c)** und der unteren Stütze **(2a)** angeordnet ist und/oder
- ein Dämmelement **(20e),** das zwischen dem Auflagerknoten **(4)** und der der oberen Stütze **(2b)** bzw. zwischen dem oberen Auflagerkörper **(4e)** und der oberen Stütze **(2b)** angeordnet ist.

11. Holzbauanordnung mit einer Verbindungsvorrichtung **(3)** nach einem der vorgehenden Ansprüche, mit einer Stütze **(2a)** und mit einem Holzbauelement **(1),** welches insbesondere aus Brettsperrholz gefertigt ist, wobei die Verbindungsvorrichtung **(3)** auf der Stütze **(2a)** aufgelagert ist und das Holzbauelement **(1)** an der Verbindungsvorrichtung **(3)** hängend montiert ist, bzw. die Verbindungsvorrichtung **(3)** an der Oberseite (**1a**) des Holzbauelementes **(1)** mit diesem verbunden ist.

12. Bauwerk mit einer Holzbauanordnung nach Anspruch 11.

## Claims

1. A connecting device (3) for mounting a wooden construction element (1), in particular in the form of a panel or beam, on a support (2a), the connecting device (3) comprising
- a mounting node (4), which is designed for mounting the connecting device (3) on the support (2a) and
- a coupling arrangement (5), which is connected to the mounting node (4) and which, in the installed state, while projecting from the mounting node (4) on an upper side (1a) of the wooden construction element (1), can be connected to the latter using fastening members (7), which at least partially pass through the wooden construction element (1), wherein the mounting node (4) and the coupling arrangement (5) are each produced from a material which has a higher strength than that of the wooden construction element (1), and wherein
- the coupling arrangement (5) is designed in such a way that it can be connected to the wooden construction element (1) in each case along a fastening member axis (7c) by means of screw-shaped, pin-shaped or nail-shaped fastening members (7), in particular a self-drilling wood screw,
- the coupling arrangement (5) has fastening member bores (9), which determine the position and direction of the fastening member axes (7c), **characterized in that** these fastening member bores (9) are designed in such a way that, in the installed state,
- the fastening member axis (7c) encloses together with a normal vector *n* extending from the underside (5a) of the coupling arrangement (5) one angle of inclination *θ* each, which is 30° to 60° or about 45°, and
- a direction vector *s'* of the projection of the fastening member axis (7c) on a coupling plane (6) defined by the underside (5a) of the coupling arrangement (5) encloses together with a radial vector *r* lying in the coupling plane (6) a horizontal angle *ϕ*,
wherein the radial vector *r* runs from a center *O* of the mounting node (4) that is disposed in the coupling plane (6) to a point of intersection *P*, in which the fastening member axis (7c) intersects the coupling plane (6), and
- wherein the horizontal angle *ϕ* is 0° to +180° or 45° to 135° or -45° to -135°.

2. The connecting device (3) according to claim 1, wherein the coupling arrangement (5) has at least one coupling finger (8), which is adjustably connected to the mounting node (4), in particular in pivotal fashion via a joint, and is adjustable between a space-saving rest position and a work position.

3. The connecting device (3) according to any of the preceding claims, wherein the connecting device (3) has at least one fastening member block (11), which, in the installed state, is arranged on an upper side (5b) of the coupling arrangement (5),
and has one or more fastening member bores (9), which determine the position and direction of the fastening member axes (7c).

4. The connecting device (3) according to any of the preceding claims, wherein the mounting node (4) comprises
- a coupling node (4a), to which the coupling arrangement (5) is connected in the installed state,
- a lower support body (4b), which, in the installed state, projects downwards and which, in the installed state, is connected to the coupling node (4a) and passes through the wooden construction element (1),
- a lower mounting body (4c), which, in the installed state, is connected to the lower mounting body (4b) and is designed for mounting or the assembly on the support (2a).

5. The connecting device (3) according to claim 5, wherein the mounting node (4) additionally comprises
- an upper support body (4d), which, in the installed state, projects upwards and which, in the installed state, is connected to the coupling node (4a), and
- an upper mounting body (4e), which, in the installed state, is connected to the upper support body (4d) and is designed for mounting a further support (2b).

6. The connecting device (3) according to claim 5 or 6, wherein
- the coupling node (4a), the lower support body (4b) and the lower mounting body (4c) are designed in such a way that the distance between the coupling node (4a) and the lower mounting body (4c) can be adjusted and/or
- the coupling node (4a), the upper support body (4d) and the upper mounting body (4e) are designed in such a way that the distance between the coupling node (4a) and the upper support body (4e) can be adjusted.

7. The connecting device (3) according to any of the preceding claims, wherein a plurality of the components and/or members of the connecting device (3), which, in the installed state, are connected to one another, are all detachably connected to one another, in particular via screw, clamp, bolt, splint or bayonet connections.

8. The connecting device (3) according to any of the preceding claims, wherein the connecting device (3) has a structure-borne sound insulating unit (20a-20e), which is designed in such a way that, in the installed state, the structure-borne sound insulating transmission is insulated or attenuated from the wooden construction element (1) via the connecting device (3) to the lower support (2a) and/or to the upper support (2b).

9. The connecting device (3) according to any of the preceding claims, wherein the connecting device (3) is designed in such a way that, in the installed state, at least part of the flow of forces is passed via at least one insulating element (20a-20e) in each case, which is designed for insulating or attenuating the structure-borne sound transmission.

10. The connecting device (3) according to any of the preceding claims, wherein, in the installed state, the connecting device (3) comprises at least one of the following insulating elements (20a-20e)
- an insulating element (20a), which is arranged between the upper side (1a) of the wooden construction element (1) and the underside (5a) of the coupling arrangement (5) and/or
- an insulating element (20b), which is arranged between the upper side (5b) of the coupling arrangement (5) and an underside (11a) of the fastening member block (11) and/or
- an insulating element (20c), which is arranged between the underside (1b) of the wooden construction element (1) and the lower mounting body (4c) and/or
- an insulating element (20d), which is arranged between the mounting node (4) and the lower support (2a) or between the lower support body (4c) and the lower support (2a) and/or
- an insulating element (20e), which is arranged between the mounting node (4) and the upper support (2b) or between the upper support body (4e) and the upper support (2b).

11. A wooden construction arrangement having a connecting device (3) according to any of the preceding claims, comprising a support (2a) and a wooden construction element (1), which is made in particular from cross laminated timber, wherein the connecting device (3) is mounted on the support (2a) and the wooden construction element (1) is attached to the connecting device (3) in suspended fashion or the connecting device (3) is connected to the wooden construction element (1) on the upper side (1a) thereof.

12. A structure comprising a wooden construction arrangement according to claim 11.

## Revendications

1. Dispositif de liaison (3) pour supporter un élément de construction en bois (1), en particulier en forme de panneau ou de poutre, sur un support (2a), le dispositif de liaison (3) comprenant
- un nœud d'appui (4) conçu pour supporter le dispositif de liaison (3) sur le support (2a),
- un dispositif de couplage (5), relié au nœud d'appui (4), lequel, à l'état monté, faisant saillie du nœud d'appui (4) sur une face supérieure (1a) de l'élément de construction en bois (1), peut être relié à celui-ci au moyen de moyens de fixation (7) traversant au moins partiellement l'élément de construction en bois (1), où
le nœud d'appui (4) et le dispositif de couplage (5) sont respectivement fabriqués dans un matériau qui présente une rigidité supérieure à celle de l'élément de construction en bois (1), et où
- le dispositif de couplage (5) est conçu de telle sorte qu'il peut être relié à l'élément de construction en bois (1) au moyen de moyens de fixation (7) en forme de vis, de broche ou de clou, en particulier une vis autoperceuse bois, respectivement le long d'un axe central de fixation (7c),
- le dispositif de couplage (5) comporte des alésages centraux de fixation (9) qui déterminent la position et la direction des axes centraux de fixation (7c), **caractérisé en ce que** ces alésages centraux de fixation (9) sont conçus de telle manière que, à l'état monté
- l'axe central de fixation (7c) forme respectivement un angle d'inclinaison θ qui est de 30° à 60° ou d'environ 45° avec un vecteur normal *n* partant de la face inférieure (5a) du dispositif de couplage (5), et
- un vecteur de direction *s'* de la projection de l'axe central de fixation (7c) sur un plan de couplage (6) défini par la face inférieure (5a) du dispositif de couplage (5) forme un angle horizontal ϕ avec un vecteur radial *r* situé dans le plan de couplage (6), le vecteur radial *r* allant d'un centre *O* du nœud d'appui (4) situé dans le plan de couplage (6) à un point d'intersection *P* auquel l'axe central de fixation (7c) coupe le plan de couplage (6), et
- où l'angle horizontal ϕ est de 0° à +180° ou 45° à 135° ou -45° à -135°.

2. Dispositif de liaison (3) selon la revendication 1, dans lequel le dispositif de couplage (5) présente au moins un doigt de couplage (8) qui est relié de manière réglable, en particulier de manière pivotante par une articulation, au nœud d'appui (4) et qui est réglable entre une position de repos peu encombrante et une position de travail.

3. Dispositif de liaison (3) selon l'une des revendications précédentes, dans lequel le dispositif de liaison (3) comprend au moins un bloc central de fixation (11) qui, à l'état monté, est disposé sur une face supérieure (5b) du dispositif de couplage (5),
et un ou plusieurs alésages centraux de fixation (9) qui déterminent la position et la direction des axes centraux de fixation (7c).

4. Dispositif de liaison (3) selon l'une des revendications précédentes, dans lequel le nœud d'appui (4) comprend
- un nœud de couplage (4a) auquel le dispositif de couplage (5) est relié à l'état monté,
- un corps de support inférieur (4b) s'étendant vers le bas à l'état monté, qui, à l'état monté, est relié au nœud de couplage (4a) et traverse l'élément de construction en bois (1),
- un corps d'appui inférieur (4c) lequel, à l'état monté, est relié au corps de support inférieur (4b) et est conçu pour s'appuyer ou être monté sur le support (2a).

5. Dispositif de liaison (3) selon la revendication 4, dans lequel le nœud d'appui (4) comprend en outre
- un corps de support supérieur (4d) s'étendant vers le haut à l'état monté et qui, à l'état monté, est connecté au nœud de couplage (4a),
- un corps d'appui supérieur (4e) lequel, à l'état monté, est relié au corps de support supérieur (4d) et est conçu pour supporter un support supplémentaire (2b).

6. Dispositif de liaison (3) selon la revendication 4 ou 5, dans lequel
- le nœud de couplage (4a), le corps de support inférieur (4b) et le corps d'appui inférieur (4c) sont conçus de telle sorte que la distance entre le nœud de couplage (4a) et le corps d'appui inférieur (4c) est réglable, et/ou
- le nœud de couplage (4a), le corps de support supérieur (4d) et le corps d'appui supérieur (4e) sont conçus de telle sorte que la distance entre le nœud de couplage (4a) et le corps d'appui supérieur (4e) est réglable.

7. Dispositif de liaison (3) selon l'une des revendications précédentes, dans lequel plusieurs des composants ou éléments du dispositif de liaison (3) reliés entre eux à l'état monté peuvent respectivement être reliés entre eux de manière amovible, en particulier par des liaisons à vis, des liaisons par serrage, des liaisons boulonnées, des liaisons par goupille ou des liaisons à baïonnette.

8. Dispositif de liaison (3) selon l'une des revendications précédentes, dans lequel le dispositif de liaison (3) présente un dispositif d'isolation contre les bruits de structure (20a - 20e) qui est conçu de telle sorte que, à l'état monté, la transmission des bruits de structure de l'élément de construction en bois (1) via le dispositif de liaison (3) vers le support inférieur (2a) et/ou le support supérieur (2b) est amortie ou atténuée.

9. Dispositif de liaison (3) selon l'une des revendications précédentes, où le dispositif de liaison (3) est conçu de telle sorte que, à l'état monté, au moins une partie du flux de force passe respectivement par au moins un élément isolant (20a-20e) qui est conçu pour amortir ou atténuer la transmission des bruits de structure.

10. Dispositif de liaison (3) selon l'une des revendications précédentes, où le dispositif de liaison (3) à l'état monté comporte au moins un des éléments d'isolation (20a-20e) suivants :
- un élément d'isolation (20a) qui est disposé entre la face supérieure (1a) de l'élément de construction en bois (1) et la face inférieure (5a) du dispositif de couplage (5), et/ou
- un élément d'isolation (20b) qui est disposé entre la face supérieure (5b) du dispositif de couplage (5) et une face inférieure (11a) du bloc central de fixation (11), et/ou
- un élément d'isolation (20c) qui est disposé entre la face inférieure (1b) de l'élément de construction en bois (1) et le corps d'appui inférieur (4c), et/ou
- un élément d'isolation (20d) qui est disposé entre le nœud d'appui (4) et le support inférieur (2a) ou entre le corps d'appui inférieur (4c) et le support inférieur (2a) respectivement, et/ou
- un élément d'isolation (20e) qui est disposé entre le nœud d'appui (4) et le support supérieur (2b) ou entre le corps d'appui supérieur (4e) et le support supérieur (2b) respectivement.

11. Ensemble de construction en bois avec un dispositif de liaison (3) selon l'une des revendications précédentes, avec un support (2a) et avec un élément de construction en bois (1) lequel est fabriqué en particulier en bois lamellé croisé, où le dispositif de liaison (3) s'appuie sur le support (2a) et l'élément de construction en bois (1) est monté suspendu au dispositif de liaison (3), ou où le dispositif de liaison (3) est relié à l'élément de construction en bois (1) sur la face supérieure (1a) de celui-ci respectivement.

12. Construction avec un ensemble de construction en bois selon la revendication 11.
